Europäisches Patentamt

European Patent Office

Office européen des brevets

(19)

(11) Publication number: **0 397 389**
**A1**

# EUROPEAN PATENT APPLICATION

(12)

(21) Application number: **90304806.4**

(51) Int. Cl.⁵: **F15B 11/06, F15B 15/14**

(22) Date of filing: **03.05.90**

(30) Priority: **10.05.89 JP 53806/89**

(43) Date of publication of application:
**14.11.90 Bulletin 90/46**

(84) Designated Contracting States:
**DE FR GB IT**

(71) Applicant: **BELLMATIC LIMITED**
**2-5-20 Minamimachi**
**Higashikurume City, Tokyo(JP)**

(72) Inventor: **Suzuki, Hideo**
**c/o Bellmatic,Ltd 2-5-20, Minamimachi**
**Higashikurume-shi Tokyo(JP)**

(74) Representative: **Hillier, Peter et al**
**Reginald W. Barker & Co., 13, Charterhouse**
**Square**
**London, EC1M 6BA(GB)**

(54) **Air Cylinder.**

(57) An air cylinder having an inner cylinder (15) and an outer cylinder (19), wherein one end of the inner cylinder (15) is closed with a plate and other end of the inner cylinder is closed with a partition (17) to form a chamber between the plate and the partition (17). One end of the outer cylinder (19) is kept open to the outside and other end of the outer cylinder (19) is closed with a plate, and an annular clearance is formed between the inner cylinder (15) and the outer cylinder (19) to build a film of air, whereby the outer cylinder is slidably displaced on the inner cylinder in the axial direction with the film of air kept therebetween.

# FIG.I

# AIR CYLINDER

## BACKGROUND OF THE INVENTION

### Technical Field of the Invention

The present invention relates generally to an air cylinder. More particularly, the present invention relates to an improvement of the air cylinder including an inner cylinder and an outer cylinder wherein the air cylinder can frequently be actuated at a high speed with a minimized magnitude of friction and low mechanical loss without any contact of the inner cylinder with the outer cylinder.

### Description of the Background Art

Generally, the following types of air cylinders have been hitherto used. A first type of air cylinder is constructed such that O-rings are used for movable components in an inner cylinder. A second type of air cylinder is constructed such that a labyrinth mechanism is employed for movable components in an inner cylinder to reduce friction during actuation of the air cylinder. A third type of air cylinder is constructed such that a diaphragm is arranged in the air cylinder and air is fed to and discharged from the air cylinder so as to allow the air cylinder to be actuated with a low magnitude of friction.

However, it has been found that the conventional air cylinders as described above have the following drawbacks, respectively.

The first type of air cylinder has an advantageous effect that air leakage occurs very few owing arrangement of to the O-rings which have been used for the air cylinder. However, the O-rings are liable to be easily damaged or injured due to friction appearing between the inner cylinder and the outer cylinder, resulting in shorted running life. In addition, long time and a large amount of expenditure are required for maintenance service for the O-rings and replacement of the damaged or injured O-rings with new ones. With this type of air cylinder, since the inner cylinder comes in contact with the outer cylinder with O-rings interposed therebetween, mechanical loss increases due to friction appearing between the inner cylinder and the outer cylinder. Therefore, this type of air cylinder is not suitably employable for practical applications for frequent actuation of the air cylinder at a high speed with a low level of mechanical requirement.

No frictional contact takes place with the second type of air cylinder for which the labyrinth mechanism has been employed for movable components in the inner cylinder. However, components for slidable movement of a piston rod are designed in a conventional manner without any particular modification made for them. Therefore, they are designed and constructed in a frictional structure.

The third type of air cylinder includes components for slidable movement of a piston rod which are designed and constructed in a frictional structure without any particular modification in the same manner as the conventional air cylinder.

In addition, a proposal has been made as to an air cylinder which is constructed as shown in Fig. 16. This conventional air cylinder has a small quantity of annular clearance between the inner wall surface of a cylinder casing 8 and the outer surface of a piston 9. With this construction, a disphragm 10 may undesirably be filled therebetween, unless it is correctly folded. If a rod 14 is displaced while an air feeding port 11 is kept closed, negative pressure is generated in the interior of the air cylinder with the result that the diaphragm 10 is adversely inverted or undesirably filled between the cylinder casing 8 and the piston 9.

## SUMMARY OF THE INVENTION

The present invention has been made with the foregoing background in mind and its object resides in providing an improved air cylinder of the type including an inner cylinder and an outer cylinder without O-rings, a diaphragm or the like members used therefor wherein the air cylinder can frequently be actuated at a high speed with a very small magnitude of friction and low mechanical loss without any contact of the inner cylinder with the outer cylinder.

To accomplish the above object, there is provided according to a first aspect of the present invention an improved air cylinder of the type including an inner cylinder and an outer cylinder, wherein one end of the inner cylinder is closed with a plate and other end of the inner cylinder is closed with a partition with an air feeding port being located on the plate; one end of the outer cylinder is kept open to the outside and other end of the outer cylinder is closed with a plate; and an annular clearance is formed between the inner cylinder and the outer cylinder to build a film of air, whereby the outer cylinder is slidably displaced on the inner cylinder in the axial direction with the film of air kept therebetween.

Further, according to a second aspect of the present invention, there is provided an improved air cylinder of the type including an inner cylinder and an outer cylinder, wherein one end of the inner cylinder is closed with a plate having first and second air feeding ports formed thereon and other end of the inner cylinder is closed with a partition to form a chamber between the plate and the partition, the partition having a hole formed at the central part thereof so as to allow a hollow shaft to slidably extend through the hole; one end of the outer cylinder is kept open to the outside and other end of the outer cylinder is closed with a plate including the hollow shaft, one end of the hollow shaft being integrated with the plate of the outer cylinder and other end of the hollow shaft being enlarged to provide an enlarged portion having a larger diameter, the enlarged portion being slidably received in the chamber of the inner cylinder with an annular clearance kept between the inner cylinder and the enlarged portion to build a film of air so as to allow the enlarged portion to slidably move in the chamber of the inner cylinder with the film of air kept therebetween, whereby a chamber in the outer cylinder is communicated with the chamber in the inner cylinder via an air flowing passage in the hollow shaft of which one end is opened to the chamber in the outer cylinder and of which other end is opened to the chamber in the inner cylinder; the first feeding port is communicated with an intermediate chamber between the partition and the enlarged portion via an air flowing hole which extends through the peripheral wall of the inner cylinder and terminates at the partition, while the second air feeding port is communicated directly with the chamber in the inner cylinder; and an annular clearance is formed between the inner cylinder and the outer cylinder to build a film of air, whereby the outer cylinder is slidably displaced on the inner cylinder in the axial direction with the film of air kept therebetween.

Further, according to a third aspect of the present invention, there is provided an improved air cylinder of the type including an inner cylinder and an outer cylinder, wherein one end of the inner cylinder is closed with a plate having first and second air feeding ports formed thereon and other end of the inner cylinder is closed with a partition to form a chamber between the plate and the partition, the partition having a hole formed at the central part thereof so as to allow a hollow shaft to slidably extend through the hole; one end of the outer cylinder is kept open to the outside and other end of the outer cylinder is closed with a plate including the hollow shaft, one end of the hollow shaft being integrated with the plate of the outer cylinder and other end of the hollow shaft being enlarged to provide an enlarged portion having a larger diameter, the enlarged portion being slidably received in the chamber of the inner cylinder with an annular clearance kept between the inner cylinder and the enlarged portion to build a film of air so as to allow the enlarged portion to slidably move in the chamber of the inner cylinder with the film of air kept therebetween, whereby a chamber in the outer cylinder is communicated with the chamber in the inner cylinder via an air flowing passage in the hollow shaft of which one end is opened to the chamber in the outer cylinder and of which other end is opened to the chamber in the inner cylinder; the first air feeding port is communicated with an intermediate chamber between the partition and the enlarged portion via an air flowing pipe which extends from the plate of the inner cylinder through an air flowing hole in the enlarged portion and terminates at the partition, while the second air feeding port is communicated directly with the chamber in the inner cylinder, the air flowing hole being located outside of the hollow shaft and having an annular clearance formed between the enlarged portion and the air flowing hole to build a film of air so as to allow the enlarged portion to slidably move on the air flowing pipe with the film of air kept therebetween; and an annular clearance is formed between the inner cylinder and the outer cylinder to build a film of air, whereby the outer cylinder is slidably displaced on the inner cylinder in the axial direction with the film of air kept therebetween.

With above construction of the air cylinder, as air is fed via the air feeding port on the inner cylinder, the both chambers divided by the partition are filled with pressurized air which has been fed through the annular clearances. Thus, while the both chambers are held in a well-balanced state with the pressurized air, the air cylinder is smoothly actuated with minimized frictional resistance to satisfactorily exhibit a given function.

Since the annular clearance is continuously maintained between the inner cylinder and the outer cylinder which have been slidably fitted to each other and the both chambers are communicated with each other with the pressurized air filled therein, no direct contact takes place between the inner cylinder and the outer cylinder. Thus, the air cylinder operates with a minimized quantity of mechanical friction caused by contact between the inner cylinder and outer cylinder.

Other objects, features and advantages of the present invention will become readily apparent from reading of the following description which ahs been made with reference to the accompanying drawings.

## BRIEF DESCRIPTION OF THE DRAWINGS

The present invention is illustrated in the following drawings in which:

Fig. 1 is a sectional view of an air cylinder in accordance with a first embodiment of the present invention, particularly illustrating an operative state of the air cylinder during a contraction stroke.

Fig. 2 is a sectional view of the air cylinder in Fig. 1, particularly illustrating an operative state of the air cylinder during an expansion stroke.

Figs. 3 to 8 show an air cylinder in accordance with a second embodiment of the present invention, respectively,

Figs. 9 to 14 show an air cylinder in accordance with a third embodiment of the present invention, respectively,

Fig. 15 is a schematic view which illustrates by way of example a practical application of the air cylinder of the present invention.

Fig. 16 is a sectional view of a conventional air cylinder of the type having a diaphragm used therefor.

## DESCRIPTION OF THE PREFERRED EMBODIMENTS

Now, the present invention will be described in detail hereinafter with reference to the accompanying drawings which illustrate preferred embodiments thereof.

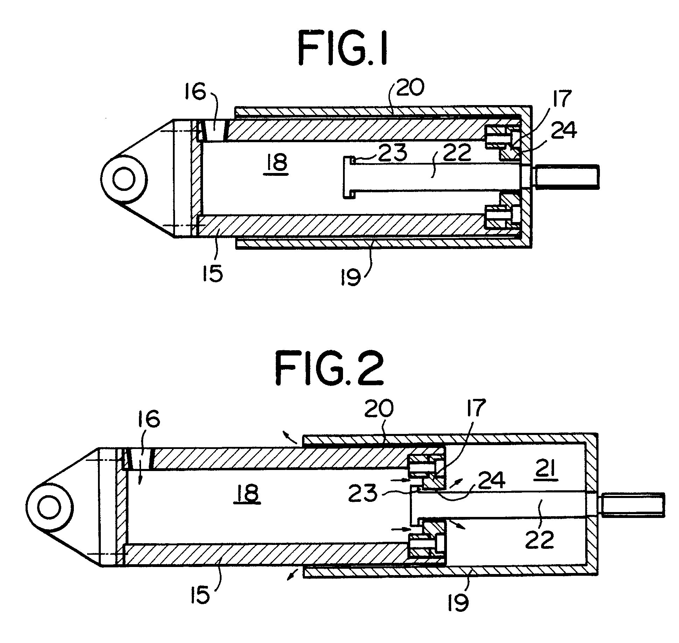

Figs. 1 and 2 are a sectional view which illustrate an air cylinder in accordance with a first embodiment of the present invention, respectively. The air cylinder is basically constituted by an inner cylinder 15 including a partition 17 and an outer cylinder 19 including a rod 22 as essential components to provide a single assembled structure.

One end of the inner cylinder 15, i.e., the left-hand end of the inner cylinder as seen in the drawings is closed with a plate and an air feeding port 16 is provided at a position in the vicinity of the left-hand end of the inner cylinder 15. The circular disc-shaped partition 17 having a hole formed at the central part thereof is firmly secured to the right-hand end of the inner cylinder 15 by a plurality of bolts or the like means. With arrangement of the partition 17 in that way, an axially extending cylindrical chamber 18 is formed between the left-hand end plate and the partition 17.

The right-hand end of the outer cylinder 19 is closed with a side wall plate made integral with the outer cylinder 19, and a part of the rod 22 is axially projected inward of the side wall plate of the outer cylinder 19. Thus, as the outer cylinder 19 is slidably fitted onto the inner cylinder 15 from the right-hand end of the latter, an axially extending cylindrical chamber 21 is formed the between the partition 17 of the inner cylinder 15 and the side wall plate of the outer cylinder 19. As is apparent from the drawings, a volume of the chamber 21 in the outer cylinder 19 can be changed by increasing or decreasing an extent of slidable fitting of the outer cylinder 19 onto the inner cylinder 15.

Specifically, the outer sleeve 19 is axially slidably fitted onto the inner sleeve 15 in such a manner that an annular clearance 20 is formed between the inner wall surface of the outer cylinder 19 and the outer wall surface of the inner cylinder 15 so as to allow air to flow through the annular clearance 20. The rod 22 extends through the hole of the partition 17 such that an enlarged portion of the rod 22 having a larger diameter at the foremost end thereof is normally located within the chamber 18 of the inner cylinder 15. In addition, the enlarged portion of the rod 22 is formed with a groove 23 to serve as an air flowing passage when the enlarged portion of the rod 22 comes in contact with the inside wall surface of the partition 17 and moreover an annular clearance 24 is formed between the inner wall surface of the partition 17 and the outer surface of the rod 22 in the same manner as the annular clearance 22 between the inner cylinder 15 and the outer cylinder 19.

The base end of the rod 22 is fixedly secured to or made integral with the side wall plate of the outer cylinder 19. Further, the rod 22 includes a male-threaded portion which projects outward of the side wall plate of the outer cylinder 19. The aforementioned components are assembled together in such a manner as shown in the drawings to constitute an air cylinder in accordance with the present invention.

Next, operation of the air cylinder as constructed in the above-described manner will be described below.

As air is fed into the interior of the air cylinder via the air feeding port 16, the chamber 18 of the inner cylinder 15 is first filled with air. Thereafter, air is introduced into the chamber 21 of the outer cylinder 19 via the air flowing passage 23 in the form of a groove on the enlarged portion of the rod 22 and an annular clearance 24 between the partition 17 and the rod 22, whereby the chamber 21 of the outer cylinder 19 is filled with the introduced air.

It should be noted that the annular clearance 20 is very small in quantity and thereby a small quantity of air leaks to the outside from the annular clearance 20 in a pressurized state. Therefore, when the chamber 21 in the outer cylinder 19 is filled with air under a certain intensity of pressure, the outer cylinder 19 is displaced to a position where outer power imparted to the outer cylinder 19 from the outside is well balanced with the inner power generated by the pressurized air in the chamber 21.

Since air in the both chambers 18 and 21 and the annular clearance 20 is kept in a pressurized state, no direct contact takes place between the inner cylinder 15 and the outer cylinder 19. Thus, mechanical friction appearing between the inner chamber 15 and the outer cylinder 19 due to contact therebetween is minimized, whereby the air cylinder of the present invention can be actuated easily and smoothly.

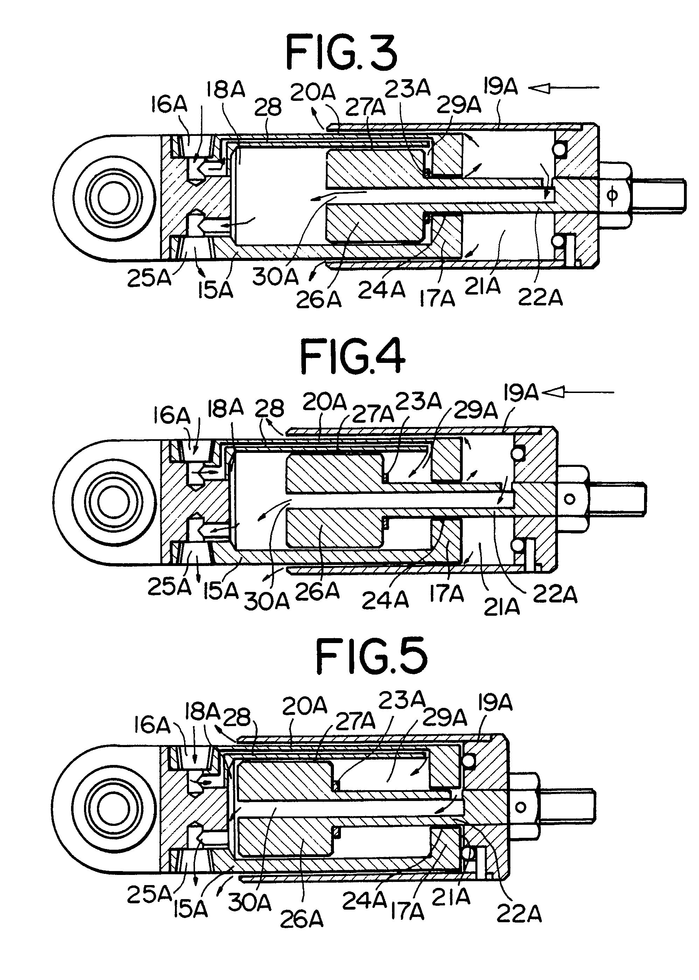

Figs. 3 to 8 are a sectional view which illustrates an air cylinder in accordance with a second embodiment of the present invention, respectively. The air cylinder is basically constituted by an inner cylinder 15A including a partition 17A and an outer cylinder 19A integrated with a hollow shaft 22A as essential components. These components are assembled together in such a manner as illustrated in the drawings to provide an air cylinder of the present invention.

One end of the inner cylinder 15A, i.e., the left-hand end of the inner cylinder 15A as seen in the drawings is closed with a plate, and an air feeding/exhausting port 16A and another air feeding/exhausting port 25A are provided on the plate at the left-hand end of the inner cylinder 15A. A circular disc-shaped partition 17A is fixedly secured to the open end of the inner cylinder 15A by a plurality of bolts or the like means. Thus, a chamber 18A is formed between the plate at the left-hand end of the inner cylinder 15A and the partition 17A. The port 16A is communicated with an air flowing hole 28 extending through the peripheral wall of the inner cylinder 15A so that the air flowing hole 28 is communicated with the right-hand end side of the inner cylinder 15A. The present invention should not be limited only to a single air flowing hole 28. Alternatively, the present invention may equally be applied to a plurality of air flowing holes 28.

On the other hand, the right-hand end of the outer cylinder 19A is closed with a plate, and a hollow shaft 22A including an enlarged portion 26A having a larger diameter extends through a hole at the central part of the plate at the right-hand end of the outer cylinder 19A. An air flowing passage 30A in the hollow shaft 22A extends through the enlarged portion 26A, and the extreme end of the air flowing passage 30A reaches the closed end of the outer cylinder 19A so that a part of the extreme end of the air flowing passage 30A is exposed to the interior of the chamber 21A.

With such construction, an axially extending cylindrical chamber 21A is formed between the partition 17A of the inner cylinder 15A and the plate at the right-hand end of the outer cylinder 19A by slidably fitting the outer cylinder 19A onto the inner cylinder 15A from the right-hand end of the latter. A volume of the chamber 21A varies as an extent of slidable fitting of the outer cylinder 19A onto the inner cylinder 15A increases or decreases. To assure that air flows over the fitting region between the inner cylinder 15A and the outer cylinder 19A, an annular clearance 20A is formed between the inner wall surface of the outer cylinder 19A and the outer wall surface of the inner cylinder 15A. Arrangement of the annular clearance 20A makes it possible to allow the outer cylinder 19A to slidably move relative to the inner cylinder 15A. The hollow shaft 22A slidably extends through a hole at the central part of the partition 17A such that the enlarged portion 26A having a larger diameter is normally held within the chamber 18A of the inner cylinder 15A. A shock absorbing ring 23A is provided in the boundary part between the enlarged portion 22A and the partition 17A so as to absorb shock caused at the time of contact of the enlarged portion 26A with the partition 17A and moreover prevent the effective volume of a chamber 29A from being reduced to a level of zero in the event of the foregoing contact. This is because, if the effective volume of the chamber 29A is excessively reduced, power shortage may occur when the air cylinder is actuated.

An annular clearance 24A is formed between the inner wall surface of the partition 17A and the outer surface of the hollow shaft 22A. In addition, an annular clearance 27A is formed between the inner wall surface of the inner cylinder 15A and the outer surface of the enlarged portion 26A so that the enlarged portion 26A slidably moves in the axial direction in the chamber 18A. It should be noted that the base end of the hollow shaft 22A is projected outward of the closed end of the outer cylinder 19A, i.e., the right-hand end of the outer cylinder 19A and all the components as described above are assembled together to provide an air cylinder of the present invention.

Next, operation of the air cylinder in accordance with the second embodiment of the present invention will be described below.

Figs. 3 to 5 illustrate that the air cylinder executes a contraction stroke, respectively.

As air is fed via the port 16A, the air flows through the air flowing hole 28 and then enters the chamber 29A, causing the chamber 29A to be expanded by air pressure. Since the enlarged portion 26A is integrated with the outer cylinder 19A via the hollow shaft 22A, the outer cylinder 19A is slidably displaced in the arrow-marked direction to reduce a volume of each of the chambers 18A and 21A. A part of the introduced air flows through the annular clearance 27A from the chamber 21A during the contraction stroke while building a film of air over the annular clearance 27A, whereby the operative region between the enlarged portion 26A and the inner cylinder 15A is lubricated with the air film. The air leaking from the annular clearance 27A and the air remaining in the chamber 18A are discharged together to the outside via the port 25A. In addition, a small quantity of air flows through the annular clearance 24A from the chamber 29A and enters the chamber 21A. Thus, the air leaking from the annular clearance 24A and the air remaining in the chamber 21A are discharged to the outside via the air flowing passage 30, the chamber 18 and the port 25A. A part of the air in the chamber 21A flow through the annular clearance 20A while lubricating the operative region between the inner cylinder 15A and the outer cylinder 19A and they are then discharged together from the air cylinder to the outside.

Fig. 4 shows that the air cylinder is executing a contraction stroke.

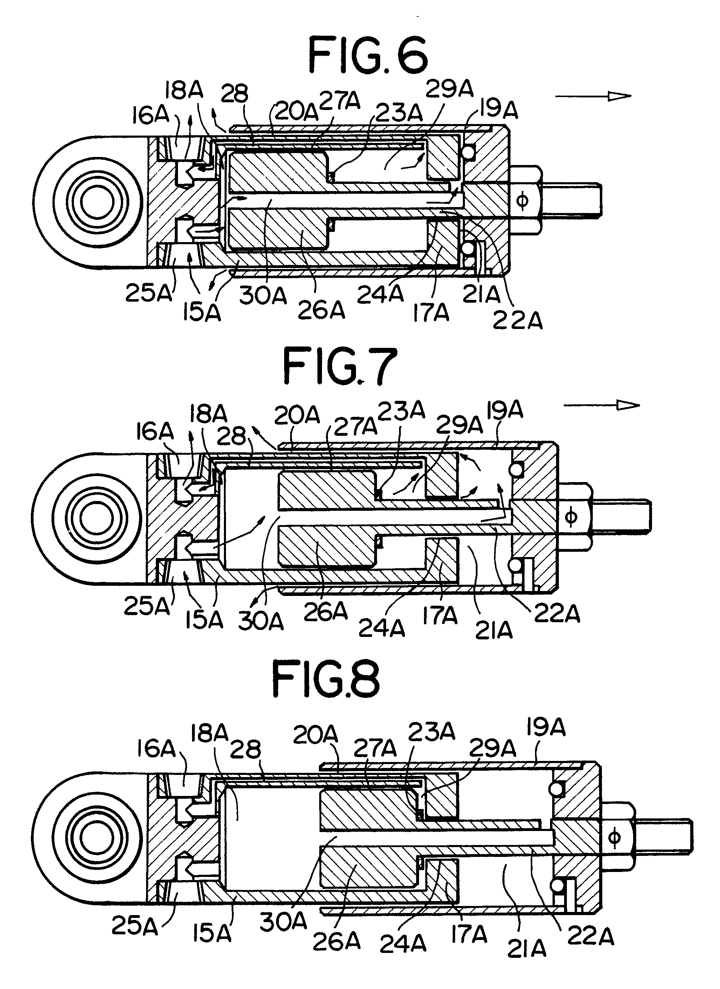

Fig. 5 shows that the air cylinder has completed the contraction stroke. At this time, a volume of the chamber 29A is maximized but a volume of each of the chambers 18A and 21A is minimized. On completion of the contraction stroke, a certain volume of space is still reserved in the chamber 21A between the the partition 17A and the outer cylinder 19A.

Figs. 6 to 8 shows that the air cylinder executes an expansion stroke, respectively.

Referring to Fig. 6, as air is fed via the port 25A, it is introduced directly into the chamber 18A and enters the chamber 21A via the air flowing passage 30A so that it expands in the chamber 21A. Since the enlarged portion 26A is integrated with the outer cylinder 19A via the hollow shaft 22A, the outer cylinder 19A is slidably displaced in the arrow-marked direction, whereby a volume of each of the chambers 21A and 18A increases gradually. A part of the introduced air flows through the annular clearance 27A while building a layer of air so that the operative region between the enlarged portion 26A and the inner cylinder 15A is lubricated with the air film. The air leaking from the annular clearance 27A and the air remaining in the chamber 29A are discharged together to the outside via the air flowing hole 28 and the port 15A. In addition, a small quantity of air flows through the annular clearance 24A from the chamber 21A so that it is discharged to the outside together with the air remaining in the chamber 29A, via the air flowing hole 28 and the port 16A. Further, a part of the air remaining in the chamber 21A flows through the annular clearance 20A while lubricating the operative region between the inner cylinder 15A and the outer cylinder 19A with a film of air. Thereafter, it is discharged to the outside from the open end of the outer cylinder 19A.

Fig. 7 shows that the air cylinder is executing the expansion stroke in the above-described manner.

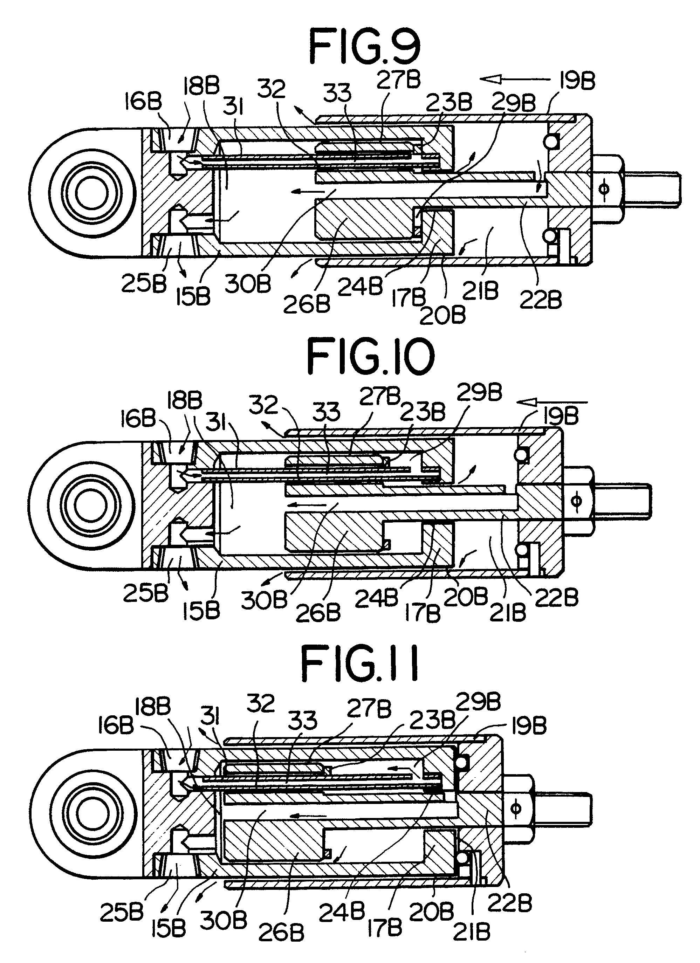

Fig. 8 shows that the air cylinder has completed the expansion stroke. As is apparent from the drawing, a volume of each of the chambers 21A and 18A is maximized but a volume of the chamber 29A is minimized. At this time, the air chamber 29A is contracted with an adequate level of volume reserved between the enlarged portion 26A and the partition 17A.

Figs. 9 to 14 show an air cylinder in accordance with a third embodiment of the present invention, respectively. According to the third embodiment of the present invention, an air flowing pipe 31 extending through a chamber 18B, an enlarged portion 26B and a chamber 29B to reach a partition 17B is substituted for the air flowing hole 28 in the second embodiment of the present invention. One end of the air flowing pipe 31, i.e. the left-hand end of the air flowing pipe 31 as seen in the drawings is fixedly located in the vicinity of an air feeding exhausting hole 16B, and the other end of the air flowing pipe 31, i.e., the right-hand end of the air flowing pipe 31 is fixedly secured to the partition 17B. As is apparent from the drawings, the air flowing pipe 31 extends through the chamber 18B and it is then inserted into a through hole 33 located outside of an air flowing passage 30B at the central part of the partition 17B, with an annular clearance 32 kept round the air flowing pipe 31, so that the air flowing pipe 31 is opened to a chamber 29B at a position sufficiently near to the partition 17B to establish communication between the port 16B and the 20 chamber 29B. Other components rather than the aforementioned ones are same those in the second embodiment of the present invention.

Figs. 9 to 11 shows that the air cylinder executes a contraction stroke, respectively.

Referring to Figs. 9 to 11, as air is fed via the port 16B, it flows through the air flowing pipe 31 and enters the chamber 29B so that the chamber 29B is expanded. Since the enlarged portion 26B is integrated with the outer cylinder 19B via the hollow shaft 22B, the outer cylinder 19B is slidably displaced in the arrow-marked direction while reducing a volume of the chamber 21B. A small quantity of air flows through the annular clearances 27B and 32 while building a film of air during the contraction stroke, whereby the operative region between the outer surface of the air flowing pipe 31 and the inner surface of an air flowing hole 33 in the enlarged portion 26B as well as the operative region between the outer surface of the enlarged portion 26B and the inner wall surface of the inner cylinder 15B are lubricated with the air film, respectively. The air leaking through the annular clearances 27B and 32 and the air remaining in the chamber 18B are discharged together to the outside via the port 25B. Other behavior of actuation of the air cylinder rather than the aforementioned one is same as in the second embodiment.

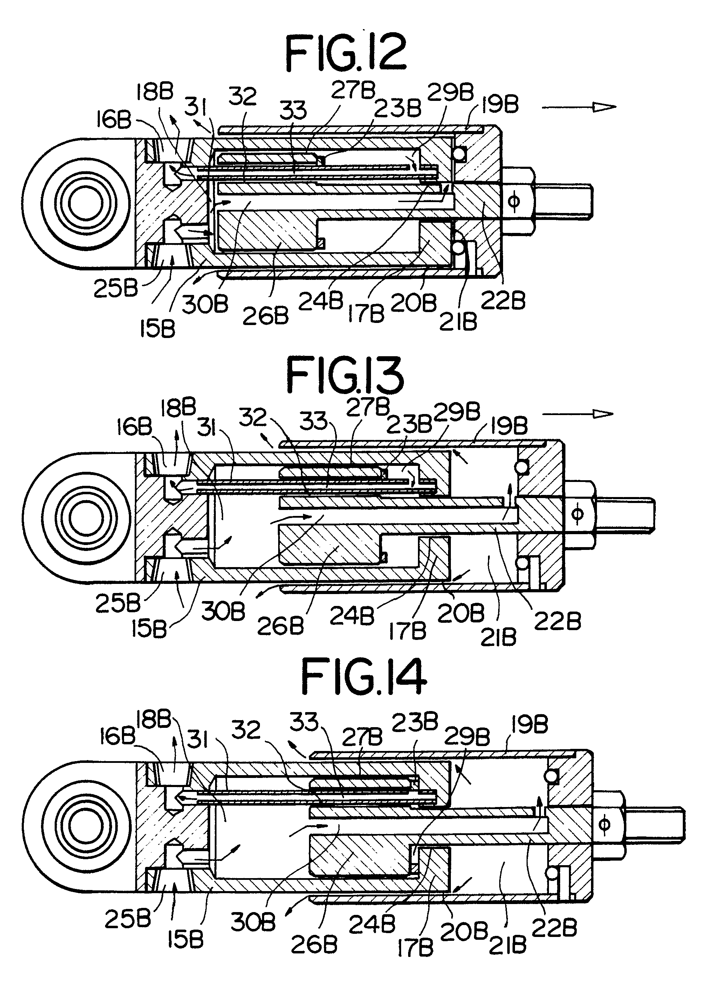

Figs. 12 to 14 show that the air cylinder executes an expansion stroke, respectively.

Referring to Figs. 12 to 14, as air is fed via the port 25B, it is introduced directly into the chamber 18B and then flows through the air flowing passage 30B of the hollow shaft 22B to enter the chamber 21B. Thus, the chamber 21B is enlarged by air pressure. Since the enlarged portion 26B is integrated with the outer cylinder 19B via the hollow shaft 22B, the outer cylinder 19B is slidably displaced in the arrow-marked direction, whereby a volume of each of the chambers 21B and 18B is enlarged. A small quantity of air flows through the annular clearances 27B and 32 while building a layer of air in the annular clearances 27B and 32 during the expansion stroke, whereby the operative region between the air flowing pipe 31 and the air flowing hole 33 as well as the operative region between the outer surface of the enlarged portion 26B and the inner wall surface of the inner cylinder 15B are lubricated with the air film, respectively. The air leaking from the annular clearances 27B and 32 and the air remaining in the chamber 29B are discharged together to the outside via the air flowing pipe 31 and the port 16B. Other behavior of actuation of the air cylinder rather than the aforementioned one is same as in the second embodiment.

As an adequate measure to be taken at the time when a certain magnitude of eccentric load is imparted to the air cylinder in accordance with the second and third embodiments in the axial direction, the annular clearance 20A, 20B, the annular clearance 24A, 24B, the annular clearance 27A, 27B and the annular clearance 32 may be filled with a ball bearing or a certain kind of lubricant preferably employable for sliding movement, respectively. Alternatively, each of the surfaces associated with the aforementioned annular clearances may be coated or plated with suitable material. In any one of the above-described embodiments of the present invention, the air cylinder is designed to have a circular sectional shape. However, the present invention should not be limited only to this. Alternatively, a sectional shape of the air cylinder may be designed in a polygonal contour or in a rectangular contour.

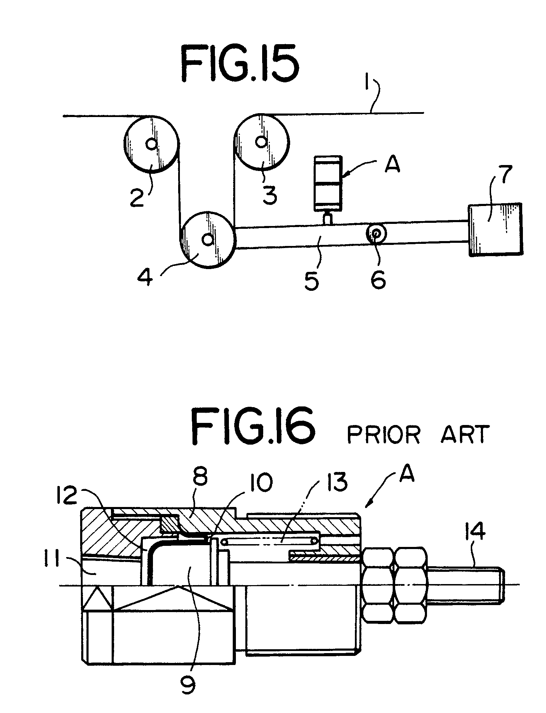

Fig. 15 is a schematic view which illustrates by way of example a practical application of the air cylinder in accordance with the present invention.

If loosening occurs along the conveying surface of a strip which is used as raw material for producing, e.g., magnetic tapes, the strip may carry out snake-shaped movement on a series of guide rollers, resulting in an occurrence of slippage, incomplete transportation of the strip, damage or injury on the surface of the strip during transportation or the like malfunction.

To avoid the foregoing malfunction, a proposal has been made as shown in Fig. 15. Specifically, a pair of guide rollers 2 and 3 are arranged midway of a transportation passage of the strip 1 in a spaced relationship with a certain distance kept therebetween. In addition, a dancer roller 4 is disposed below the guide rollers 2 and 3 so that the strip 1 is transported around the guide rollers 2 and 3 and the dancer roller 4. The dancer roller 4 is rotatably supported at the foremost end of a lever 5 which includes a pivotal shaft 6 at an intermediate location and holds a weight 7 at an opposite end thereof. With this construction, an air cylinder A adapted to effectively operate like a piston with a minimum magnitude of friction is operatively connected to the lever 5 and serves to depress the dancer roller 4 for the purpose of canceling undesirable fluctuation of tension appearing on the strip 1 at a position assumed by the dancer roller 4. With the conventional air cylinder, it has been found that mechanical friction increases in response to actuation of a piston 9 in the air cylinder A (see Fig. 16) with the result that an operation for adjusting a tension on the strip 1 fails to be smoothly performed by the dancer roller 4.

The conventional air cylinder A can be used as a shock absorbing unit by adjusting or controlling the tension active on an inner cylinder or an outer cylinder. In addition, the conventional air cylinder A may be used as an actuator of which inner cylinder or outer cylinder is displaced by air pressure.

In contrast with the conventional air cylinder A, according to the present invention, an air cylinder is constructed with a film of air formed between an inner cylinder and an outer cylinder to hold them in a floated state without arrangement of frictional components associated with a rod or shaft as well as O-rings or the like members. Consequently, the air cylinder of the present invention operates without direct contact between the inner cylinder and the outer cylinder with a substantially reduced magnitude of friction, resulting in an excellent operative function and high properties for finely adjusting a tension on the load side being assured.

While the present invention has been described above with respect to three preferred embodiments thereof, it should of course be understood that it should not be limited only to them but various changes or modifications may be made without departure from the scope of the invention as defined by the appended claims.

## Claims

1. In an air cylinder including an inner cylinder and an outer cylinder, the improvement wherein; one end of said inner cylinder is closed with a plate and other end of said inner cylinder is closed with a partition to form a chamber between said plate and said partition with an air feeding port being located on said plate, one end of said outer cylinder is kept open to the outside and other end of said outer cylinder is closed with a plate, and an annular clearance is formed between the inner cylinder and the outer cylinder to build a film of air, whereby the outer cylinder is slidably displaced on the inner cylinder in the axial direction with said film of air kept therebetween.

2. In an air cylinder including an inner cylinder and an outer cylinder, the improvement wherein; one end of said inner cylinder is closed with a plate having first and second air feeding ports formed thereon and other end of said inner cylinder is closed with a partition to form a chamber between said plate and said partition, said partition having a hole formed at the central part thereof so as to allow a hollow shaft to slidably extend through said hole, one end of said outer cylinder is kept open to the outside and other end of said outer cylinder is closed with a plate including said hollow shaft, one end of said hollow shaft being integrated with said plate of said outer cylinder and other end of said hollow shaft being enlarged to provide an enlarged portion having a larger diameter, said enlarged portion being slidably received in said chamber of said inner cylinder with an annular clearance kept between said inner cylinder and said enlarged portion to build a film of air so as to allow the enlarged portion to slidably move in the chamber of the inner cylinder with said film of air kept therebetween, whereby a chamber in the outer cylinder is communicated with said chamber in the inner cylinder via an air flowing passage in the hollow shaft of which one end is opened to the chamber in the outer cylinder and of which other end is opened to the chamber in the inner cylinder, said first air feeding port is communicated with an intermediate chamber between the partition and the enlarged position via an air flowing hole which extends through the peripheral wall of the inner cylinder and terminates at the partition, while said second air feeding port is communicated directly with the chamber in the inner chamber, and an annular clearance is formed between the inner cylinder and the outer cylinder to build a film of air, whereby the outer cylinder is slidably displaced on the inner cylinder in the axial direction with said film of air kept therebetween.

3. In an air cylinder including an inner cylinder and an outer cylinder, the improvement wherein; one end of said inner cylinder is closed with a plate having first and second air feeding ports formed thereon and other end of said inner cylinder is closed with a partition to form a chamber between said plate and said partition, said partition having a hole formed at the central part thereof so as to allow a hollow shaft to slidably extend through said hole, one end of said outer cylinder is kept open to the outside and other end of said outer cylinder is closed with a plate including said hollow shaft, one end of said hollow shaft being integrated with said plate of said outer cylinder and other end of said hollow shaft being enlarged to provide an enlarged portion having a larger diameter, said enlarged portion being slidably received in said chamber of said inner cylinder with an annular clearance kept between said inner cylinder and said enlarged portion to build a film of air so as to allow the enlarged portion to slidably move in the chamber of the inner cylinder with said film of air kept therebetween, whereby a chamber in the outer cylinder is communicated with said chamber in the inner cylinder via an air flowing passage in the hollow shaft of which one end is opened to the chamber in the outer cylinder and of which other end is opened to the chamber in the inner cylinder, said first air feeding port is communicated with an intermediate chamber between the partition and the enlarged portion via an air flowing pipe which extends from the plate of the inner cylinder through an air flowing hole in the enlarged portion and terminates at the partition, while said second air feeding port is communicated directly with the chamber in the inner cylinder, said air flowing hole being located outside of the hollow shaft and having an annular clearance formed between the enlarged portion and said air flowing hole to build a film of air so as to allow the enlarged portion to slidably move on said air flowing pipe with said film of air kept therebetween, and an annular clearance is formed between the inner cylinder and the outer cylinder to build a film of air, whereby the outer cylinder is slidably displaced on the inner cylinder in the axial direction with said film of air kept therebetween.

# FIG.1

# FIG.2

# FIG.3

# FIG.4

# FIG.5

# FIG.6

# FIG.7

# FIG.8

# FIG.9

# FIG.10

# FIG.11

# FIG.12

16B 18B 31 32 33 27B 23B 29B 19B

25B 15B 30B 26B 24B 17B 20B 21B 22B

# FIG.13

16B 18B 31 32 33 27B 23B 29B 19B

25B 15B 30B 26B 24B 17B 20B 21B 22B

# FIG.14

16B 18B 31 32 33 27B 23B 29B 19B

25B 15B 30B 26B 24B 17B 20B 21B 22B

# FIG.15

# FIG.16  PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | US-A-3342396 (MILLER) <br> * column 2, line 7 - column 2, line 39; figure 1 * <br> --- | 1 | F15B11/06 <br> F15B15/14 |
| A | US-A-3331292 (SEABLOM) <br> --- | | |
| A | FR-A-954080 (SOC.DES CONSTR. MECAN. DE LA VALLEE D,OSSAU) <br> ----- | | |

|  |  |
|---|---|
| | TECHNICAL FIELDS SEARCHED (Int. Cl.5 ) |
| | F15B <br> F16J |

The present search report has been drawn up for all claims

| Place of search | Date of completion of the search | Examiner |
|---|---|---|
| THE HAGUE | 24 JULY 1990 | KNOPS J. |

EPO FORM 1503 03.82 (P0401)